# EUROPEAN PATENT SPECIFICATION

(11) **EP 1 793 349 B1**
(45) Date of publication and mention of the grant of the patent: **18.08.2010**
(21) Application number: 06124996.7
(22) Date of filing: 29.11.2006
(51) Int. Cl.: G06T 17/20

(54) **Method and aparatus for discrete mesh filleting and rounding through ball pivoting**
Verfahren und Vorrichtung zur diskreten Netzausrundung und Rundung mittels Ball-Pivoting
Procédé et appareil de raccordement de maille discret et d'arrondi par pivotement de balle

(30) Priority: 05.12.2005 US 742440 P; 22.08.2006 US 466211
(43) Date of publication of application: 06.06.2007
(73) Proprietor: Siemens Corporation, Iselin, NJ 08830 (US)
(72) Inventor: Fang, Tong, Morganville, NJ 07751 (US); Slabaugh, Gregory G., Princeton, NJ 08540 (US); Unal, Gozde, West Windsor, NJ 08550 (US); Xie, Hui, Plainsboro, NJ 08536 (US); Zhou, Jin, Forrest Hills, NY 11375 (US)
(74) Representative: Morgan, Marc

(56) References cited:
- WO-A-2005/022468
- WO-A2-01/50417
- US-B1- 6 968 299
- YU-SHEN LIU ET AL: "Mesh blending" THE VISUAL COMPUTER ; INTERNATIONAL JOURNAL OF COMPUTER GRAPHICS, SPRINGER-VERLAG, BE, vol. 21, no. 11, 1 October 2005 (2005-10-01), pages 915-927, XP019339090 ISSN: 1432-2315
- VIDA J ET AL: "A SURVEY OF BLENDING METHODS THAT USE PARAMETRIC SURFACES" COMPUTER AIDED DESIGN, ELSEVIER PUBLISHERS BV., BARKING, GB, vol. 26, no. 5, 1 May 1994 (1994-05-01), pages 341-365, XP000442375 ISSN: 0010-4485

## Description

This patent application claims the benefit of U.S. Provisional Application No. 60/742,440, filed December 5, 2005, which is hereby incorporated by reference herein in its entirety.

### CROSS-REFERENCE TO RELATED APPLICATIONS

The present application is also related to U.S. Patent Application Serial Number 60/740,366, titled Method and Apparatus for Non-Shrinking Mesh Smoothing Using Local Fitting (Attorney Docket Number 2005P21689US); and U.S. Patent Application Serial Number 60/742,503, titled Method and Apparatus for Fast and Efficient Mesh Simplification (Attorney Docket Number 2005P22087US), both of which are being filed simultaneously herewith and are hereby incorporated by reference herein in their entirety.

### BACKGROUND OF THE INVENTION

The present invention relates generally to three-dimensional mesh shapes and, more particularly, to the filleting and rounding of sharp edges of such mesh shapes.

Many applications, such as medical and industrial design and manufacturing applications, involve manipulating and editing digital models of objects that have been scanned via, illustratively, 3D scanning of the object. As one skilled in the art will understand, such digital models typically consist of a point cloud representation of the object, with the number of points depending upon the resolution of the scanning process. Once such a point cloud representation has been obtained, the surface of the object is, in many instances, then approximated by connecting the points of the point cloud to form a mesh of triangles on the surface of the point cloud representation. This surface may then be edited by using, for example, computer aided design (CAD) software programs or similar specialized image manipulation software programs.

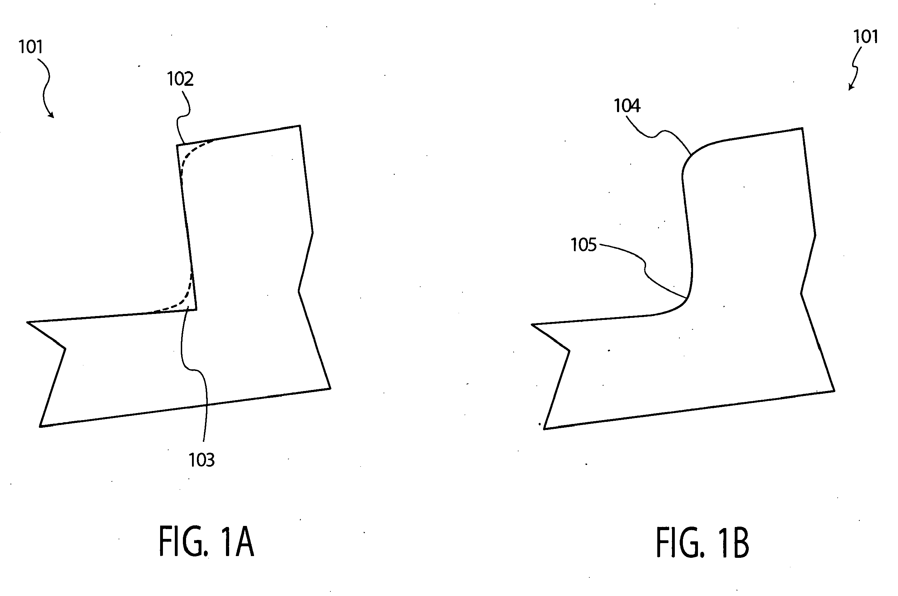

Many editing operations are extremely well known and are integrated into most computer aided design (CAD) software programs. Two illustrative and well-known operations, referred to herein as filleting and rounding, are frequently applied to digital models of a three dimensional shape to smooth out, or round, a sharp edge of the model into a smoother edge. FIG. 1 shows an illustrative example of such filleting and rounding. Referring to that figure, shape 101 is, illustratively, a cross section of a three-dimensional object such as an aforementioned model of a shape stored in computer memory. Shape 101 has, for example, corner 102 and corner 103 for which rounding/filleting are desired to smooth the corners. By removing corners 102 and 103 and blending in the adjacent surfaces, smoothed surfaces 104 and 105 result. Surface 104 is referred to herein as a "rounded" surface, since that surface is convex. On the other hand, surface area 105 is referred to herein as "filleted", since that surface is concave.

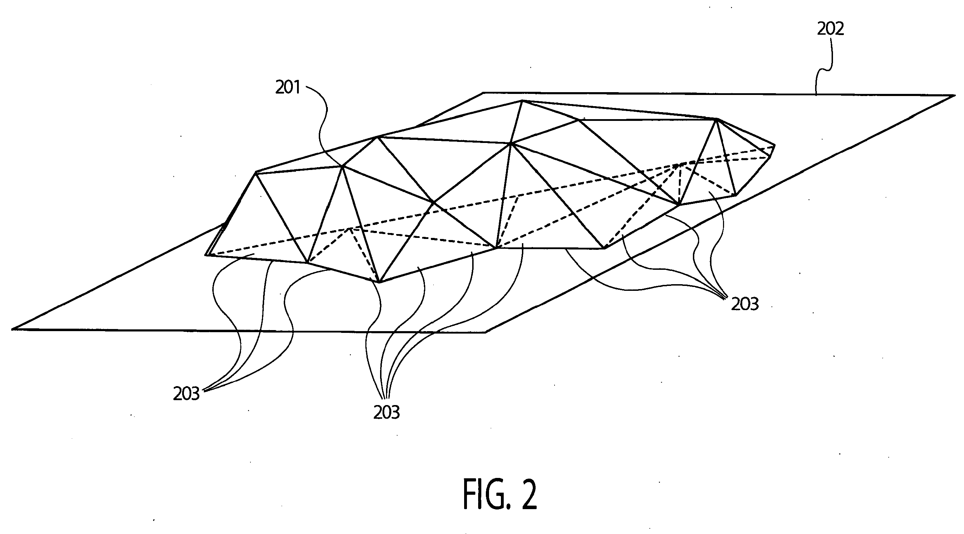

In many situations, the editing of a triangle mesh model, such as the aforementioned model created from connecting the points obtained by 3D scanning of an object, will result in sharp edges. For example, FIG. 2 shows an illustrative 3D shape 201 that has been edited by cutting the shape 201 with cutting plane 202. Such a cutting operation produces a sharp edge 203 for which, illustratively, a rounded edge may be desirable.

Yu-Shen Liu et al., "Mesh blending", Visual Comput (2005) 21:915-927, discloses a rolling-ball algorithm to round edges which demands the computation of a curve along which the ball should roll.

### SUMMARY OF THE INVENTION

The present inventors have recognized that, while prior methods for filleting and rounding are advantageous in many regards, they are also disadvantageous in some aspects. In particular, while prior attempts at filleting and rounding are well known, such techniques are primarily useful only on models having continuous surfaces. For models that have non-continuous surfaces, such as the triangle mesh surfaces of shape 201, such techniques are typically not satisfactory as such surfaces are not analytically computable. Thus, as one skilled in the art will recognize, such prior filleting and rounding techniques may produce a rough and bumpy surface and not a continuous smooth surface as is the desired output of such rounding and filleting techniques.

According to a first aspect of the invention, a method for rounding an edge between two sides of a surface of a model comprises the steps set out in claim 1 attached hereto.

According to a second aspect of the invention, apparatus for rounding an edge between two sides of a surface of a model comprises the features set out in claim 5 attached hereto.

### BRIEF DESCRIPTION OF THE DRAWINGS

FIG. 1 shows a cross section of a 3D shape having sharp corners that are rounded and/or filleted;
FIG. 2 shows an illustrative 3D shape that has been edited in a way such that sharp edges are produced;
FIG. 3A shows a ball in an initial position relative to a seed triangle at the start of a prior ball-pivoting algorithm;
FIG. 3B shows how the ball of FIG. 3A is pivoted around a leg of the seed triangle to construct a triangle mesh surface in accordance with a prior ball-pivoting algorithm;
FIG. 4 shows the illustrative 3D shape of FIG. 2 and the resulting sharp edges;
FIG. 5 shows a representation of a sharp edge of the 3D shape of FIG. 4;
FIG. 6 shows a general representation of how a novel ball pivoting algorithm can move a ball along a sharp edge of the 3D shape of FIG. 4 in accordance with an embodiment of the present invention;
FIG. 7A shows how a ball can be positioned with respect to a seed triangle in the representation of FIG. 5 at the start of a rounding method in accordance with an embodiment of the present invention;
FIG. 7B shows how the ball of FIG. 7A can be pivoted along a sharp edge in a desired direction about a leg of a seed triangle;
FIG. 8 shows a virtual tunnel that may be created as a result of pivoting the ball along a sharp edge as shown in FIG. 7B;
FIG. 9 shows how points in proximity to a sharp edge can be projected onto the surface of the virtual tunnel of FIG. 8;
FIG. 10 shows how a sharp edge can be rounded as a result of the projection of FIG. 9;
FIG. 11 shows a resulting rounded edge of a 3D shape after surface reconstruction of the edge;
FIG. 12 is a flow chart showing the steps of a method in accordance with an embodiment of the present invention; and
FIG. 13 shows a computer adapted to perform the illustrative steps of the method of

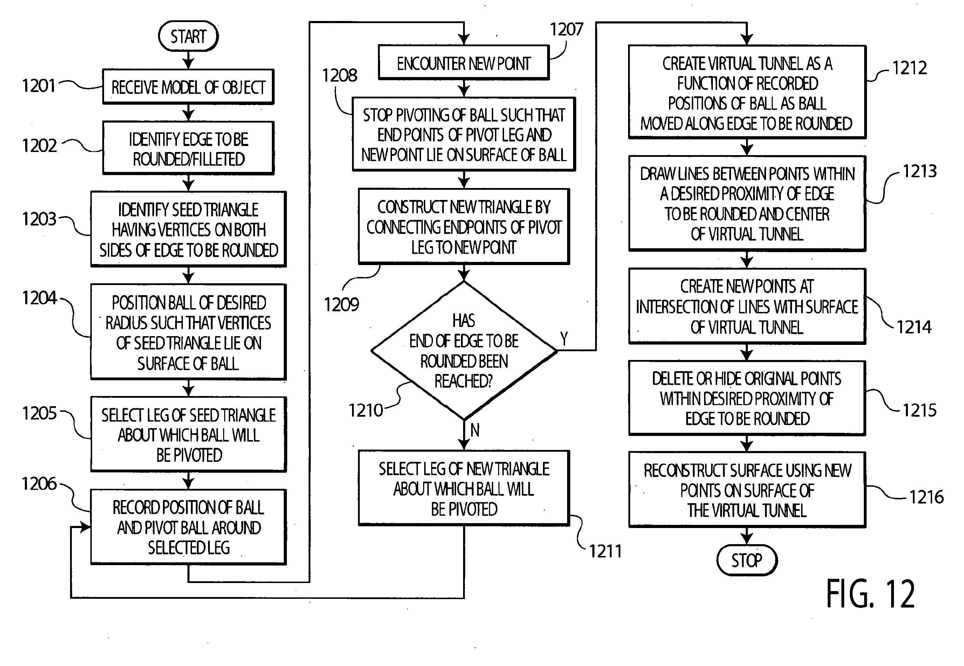

FIG. 12 as well as other functions associated with the rounding and filleting of sharp edges of 3D shapes.

### DETAILED DESCRIPTION

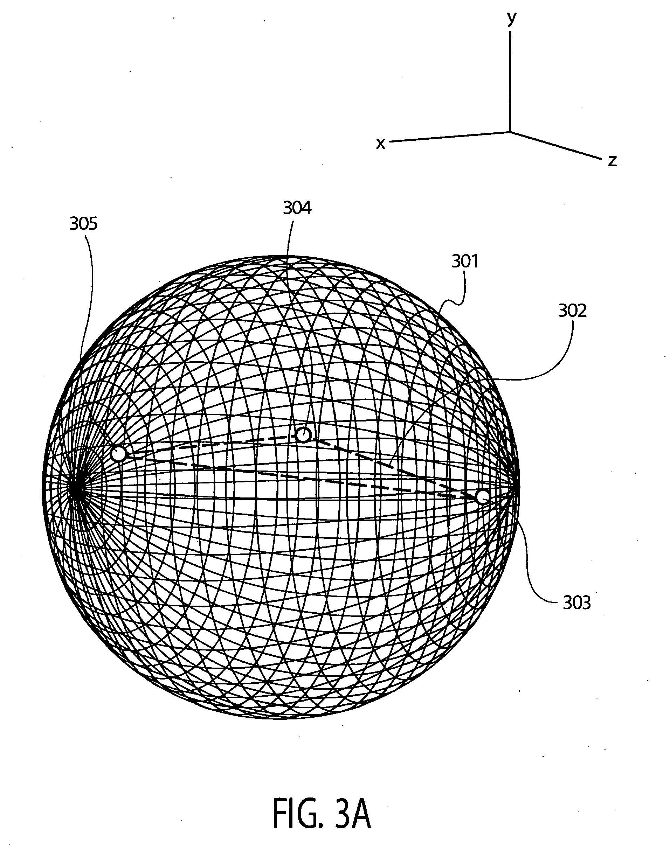

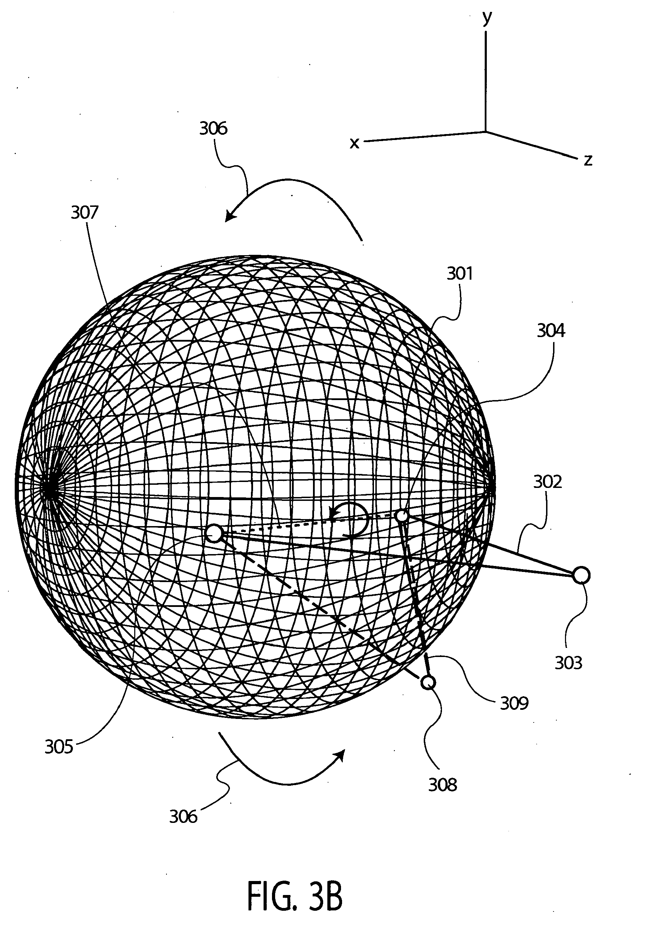

FIGs. 3A and 3B illustrate how a prior ball-pivoting algorithm may be used to construct a triangle mesh surface to approximate the surface of an object.

Specifically, referring to FIG. 3A, the vertices of triangle 302, points 303, 304 and 305, are points in a point cloud representation of an object and lie on the surface of a model of a 3D object for which a triangle mesh approximation of the surface of the object is desired. Triangle 302 is herein referred to as a seed triangle as it is selected as an initial starting position of the operation of the ball-pivoting algorithm.

Ball 301 having a desired radius (e.g., selected as a function of the density of points on the surface of the model) is then positioned initially so that each of points 303, 304 and 305 of triangle 302 lie on the surface of ball 301.

FIG. 3B illustrates how the rotation of ball 301 can be used to grow a triangle mesh approximation of the surface of an object. Specifically, referring to that figure and as discussed above, ball 301 is initially positioned so that the vertices of triangle 302 each lie on the surface ball 301. Then, one of the legs of the triangle, herein referred to as the pivot leg, is selected about which ball 301 will be pivoted. Here, leg 307 of triangle 302 is selected as the pivot leg. Then, ball 301 is pivoted about this leg, illustratively here in direction 306, with points 304 and 305 remaining fixed in place on the surface of the ball 301. Ball 301 is allowed to pivot until the surface of the ball comes into contact with another point on the surface of the model, here represented by point 308. When ball 301 contacts point 308, the pivoting of ball 301 in direction 306 then stops and, as a result, points 304, 305 and 308 will each lie on the surface of ball 301. Point 308 is then connected by lines with each end point of pivot leg 307, here points 304 and 305, to create a new triangle 309 on the surface of the model of the object. A different leg of triangle 309 is illustratively then selected as a new pivot leg and another triangle is created by pivoting ball 301 in a new direction until it contacts another point. Such a ball pivoting algorithm used for the construction of a triangle mesh surface is the subject of F. Bernardini et al., The Ball-Pivoting Algorithm for Surface Reconstruction, IEEE Transactions on Visualization and Computer Graphics, 5(4), Oct.-Dec., 1999, pp. 349-359, which is hereby incorporated by reference herein in its entirety. Such an algorithm is well-known in the art and, therefore, will not be further described herein other than as is necessary for an understanding of the embodiments of the present invention.

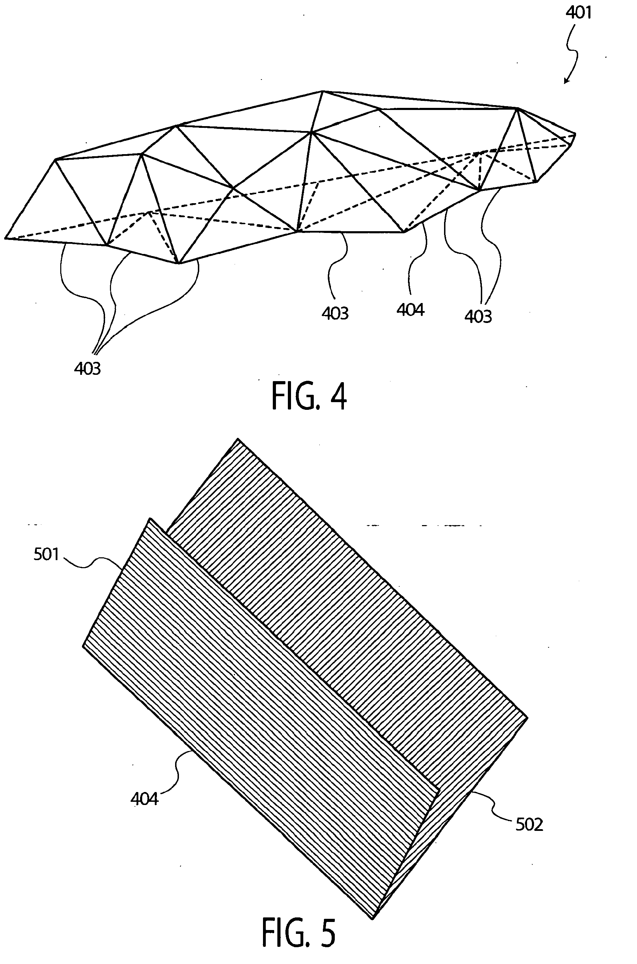

FIG. 4 shows a 3D shape 401 that is, illustratively, the shape of FIG. 2 that was created by editing a triangle mesh model of an object using cutting plane 202. As discussed previously, the result of such editing is sharp edge 403, including edge portion 404, along the plane where shape 401 was cut. As also previously discussed, it is frequently advantageous to be able to smooth such sharp edges. The present inventors have recognized that such a smoothing of edge 403 may be accomplished using a variation of the ball-pivoting algorithm, discussed herein above. Specifically, as one skilled in the art will recognize, edge 403, including edge portion 404, consists of two sides that meet together to form the edge. This is more clearly seen with reference to FIG. 5 where, referring to that figure, sides 501 and 502 meet together along edge portion 404, which is the same edge portion 404 as shown in FIG. 4. By passing a ball, such as that used in the ball-pivoting algorithm, along edge portion 404 and the rest of edge 403, a virtual tunnel having a diameter equal to that of the ball, can be defined along edge 403. By then projecting points on each side of the edge 403 onto the surface of the virtual tunnel and then reconstructing the surface along that edge, a representation of a rounded edge will result.

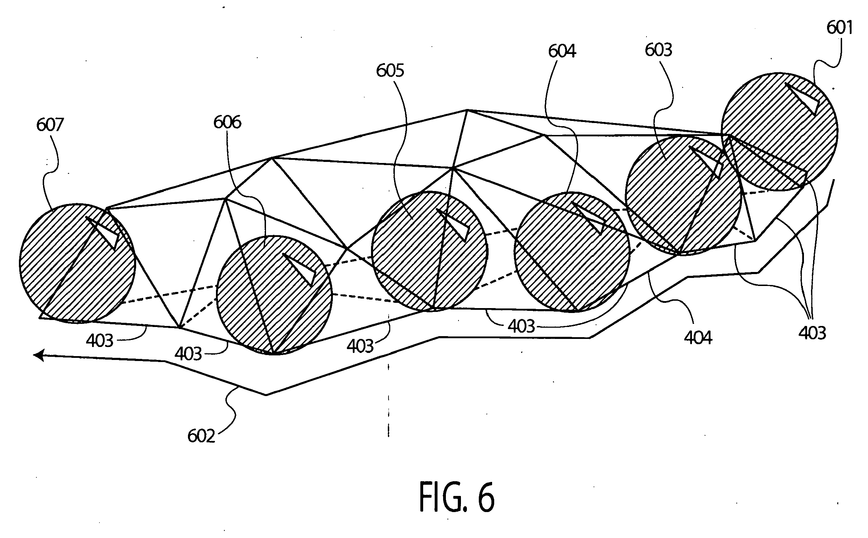

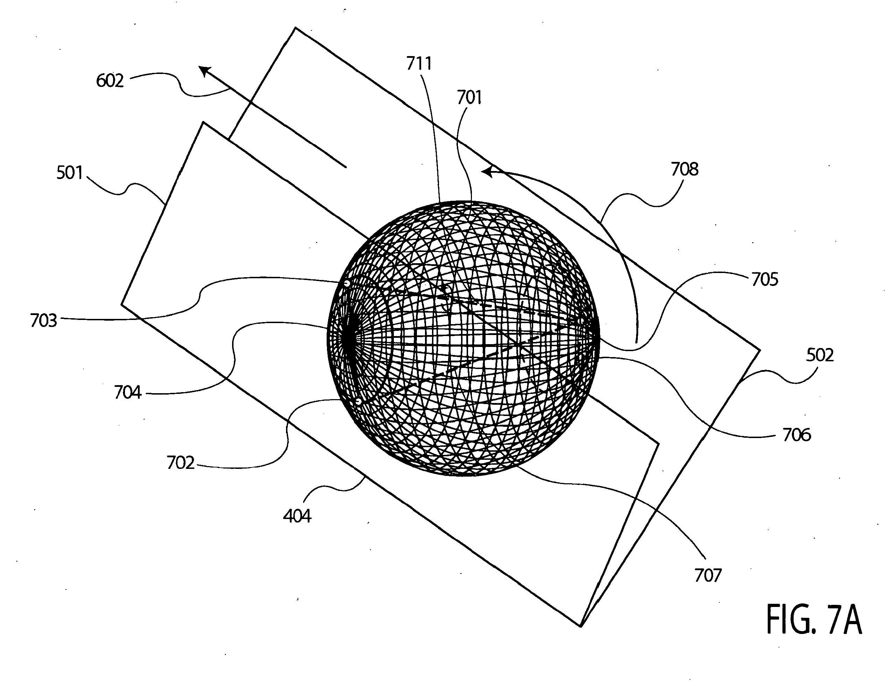

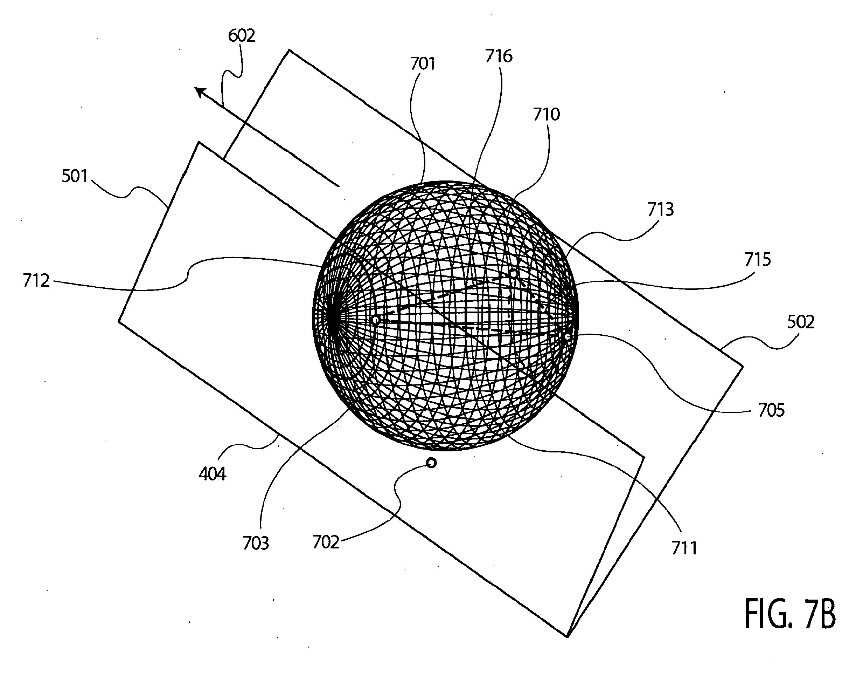

FIG. 6 shows one illustrative view of the edited 3D shape 401 of FIG. 4 having sharp edge 403 such as, once again, edge portion 404. In accordance with an embodiment of the present invention, a ball in position 601 is moved in direction 602 to successive positions 603-607 along the edge of shape 401. This movement is, for example, initiated in a similar fashion to the initiation of surface reconstruction in a ball-pivoting algorithm. In particular, a seed triangle is selected and the ball is then pivoted about a leg of that triangle until it comes into contact with another point on one of the two sides of the edge 403. Such a pivoting action is more clearly seen with reference to FIGs. 7A and 7B. Specifically, FIG. 7A once again shows sides 501 and 502 of FIG. 5 that, as discussed above, meet together to form edge portion 404 as shown in FIGs. 4, 5 and 6. In order to smooth edge portion 404, ball 701 is initially placed in a position whereby the three vertices of a seed triangle are located on the surface of the ball. In particular, referring again to FIG. 7A, points 702, 703 and 705 form seed triangle 707. Ball 701 intersects both surfaces 501 and 502, forming intersection circles 704 and 705. In this illustrative example, points 702 and 703 of seed triangle 707 lie on intersection circle 704 on side 501, while point 705 lies on intersection circle 706 on side 502. One skilled in the art will recognize in light of the teachings herein that at least one point of the seed triangle should lie on side 501 and one point should lie on side 502. Similarly, one skilled in the art will recognize that, in this embodiment, the seed triangle is selected such that, for example, no other points are inside the volume of ball 701 nor are there any other points in contact with the surface of ball 701 other than the vertices of the seed triangle 707 itself. Once ball 701 is positioned as shown in FIG. 7A, then ball 701 is pivoted along one leg of seed triangle 707. As one skilled in the art will recognize, this leg should be selected in order to achieve the desired motion of the ball along the edge to be smoothed, such as in direction 602. In the example shown in FIG. 7A, leg 711 of seed triangle 707 is selected about which ball 701 will pivot in direction 708 to move the ball in direction 602. Since ball 701 is pivoted about leg 711, which has endpoints 703 and 705, these endpoints will remain on the surface of ball 701 as it pivots.

As was the case with the ball-pivoting algorithm described herein above, ball 701 is pivoted until another point on either side 501 or side 502 comes into contact with the surface of ball 701. FIG. 7B shows the position of ball 701 after such a point has been encountered, here point 710 on surface 502. Specifically, when ball 701 contacts point 710, the pivoting about leg 711 stops. At this position, point 702 is no longer in contact with the surface of ball 701, since the ball 701 has moved incrementally in direction 602 along both sides 501 and 502 (and, hence, edge portion 404). Instead, points 703, 705 and 710 are now in contact with the surface of ball 701 at new contact circles 712 (point 703) and 713 (points 705 and 710). Thus, at this position, only one point from side 501 is in contact with ball 701 and, now, two points from side 502 are in contact with ball 701. Then, once again, a leg of triangle 715, such as leg 716, is selected about which to pivot ball 701. The ball is then once again pivoted so that it again moves in direction 602 until a new point on the surface is contacted and the process repeats. This process continues until the ball has moved along the entirety of edge 403 in direction 602 of FIG. 6. In this way, ball 701 is made to travel along a sharp edge created by the intersection of two sides, such as is created by, illustratively, cutting a triangle mesh surface.

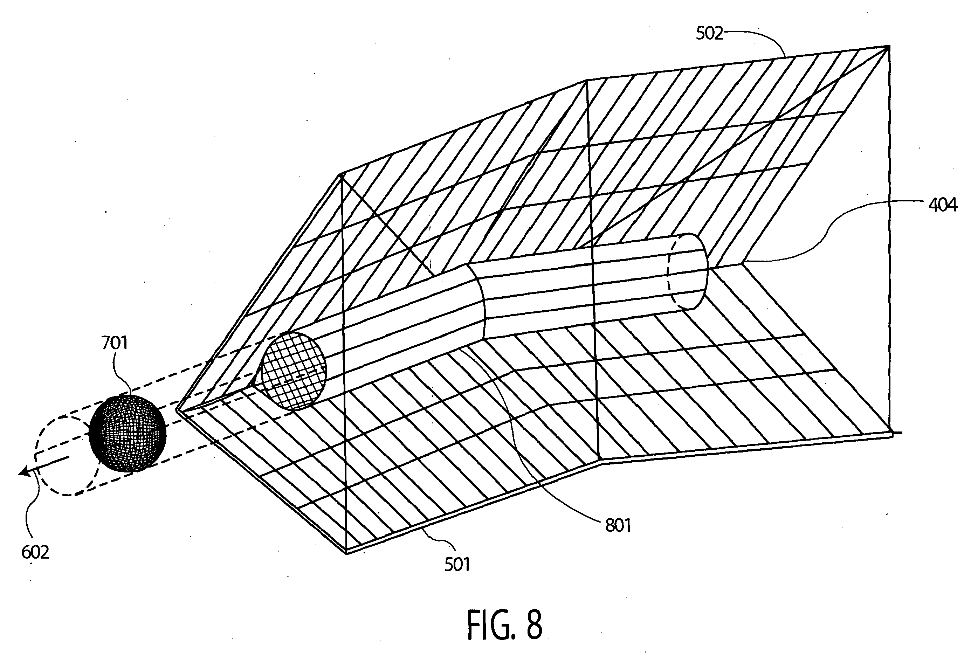

In accordance with another embodiment of the present invention, as the ball 701 moves in direction 602, the position of ball 701 at each point in time is, illustratively, recorded. As a result, after the ball has been moved along the entirety of edge 403, a virtual tunnel may be reconstructed representing the "tunnel" through which the ball passed along its path in direction 602. A portion of such a tunnel is shown in FIG. 8. Specifically, once again sides 501 and 502 and the resulting edge portion 404 where those sides meet are shown, this time from the perspective of the interior of shape 401 of FIG. 6. More specifically, FIG. 8 shows a virtual tunnel 801 that is created as a result of the foregoing process of moving ball 701 in direction 602 by pivoting ball 701 about individual legs of triangles that have at least one endpoint on side 501 and at least one endpoint on side 502, as discussed herein above. One skilled in the art will recognize that tunnel 801 will have a diameter equal to the diameter of ball 701 and will run the length of the edge to be smoothed (here edge 403 in FIG. 6).

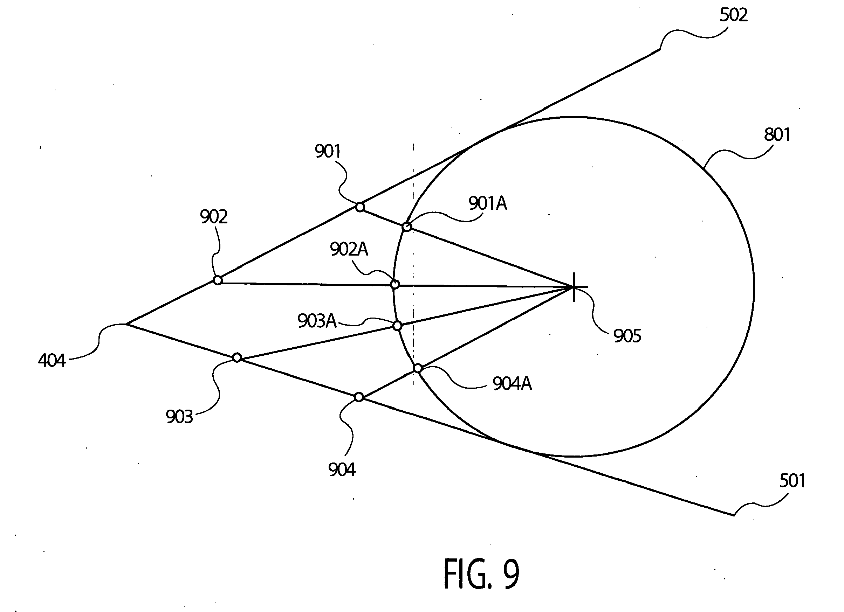

Once a virtual tunnel has been constructed along the entire length of the edge to be smoothed, then remapping of points, referred to herein as edge points, on the sides 501 and 502 in proximity to sharp edge portion 404, to a smoother edge can be accomplished. FIG. 9 shows one illustrative embodiment of how such a remapping may be achieved. Specifically, FIG. 9 shows a cross section of tunnel 801, sides 502 and 501, as well as edge portion 404 which, once again, is a portion of the full edge 403 that is to be smoothed. Side 501 has edge points 901 and 902 in proximity to edge portion 404 and side 502 has edge points 903 and 904 in proximity to that edge portion. One skilled in the art will recognize that this is a greatly simplified diagram of a typical edge. Since FIG. 9 is a cross section view of tunnel 801, it merely represents one location along edge 403 of FIG. 6. In typical cases, there are a large number of points at any position along an edge to be smoothed. Points 901-904 are, therefore, merely illustrative in nature. One skilled in the art will recognize how to apply the principles described herein to any number of such points. Referring once again to FIG. 9, in order to smooth the sharp edge portion 404, edge points 901 - 904 are projected to the surface of tunnel 801. Such a projection is accomplished by, for example, drawing a line between each of points 901 and 904 to the center point of tunnel 801. Once these lines have been drawn, the intersection of each line and the surface of tunnel 801 is determined and a new point, referred to herein as a projected point, is created at that intersection. Thus, for example, such a projection of points 901, 902, 903 and 904 will result in new projected points 901 A, 902A, 903A and 904A on the surface of tunnel 801. Points 901 - 904 may then be deleted or hidden from the representation of shape 401 of FIG. 6.

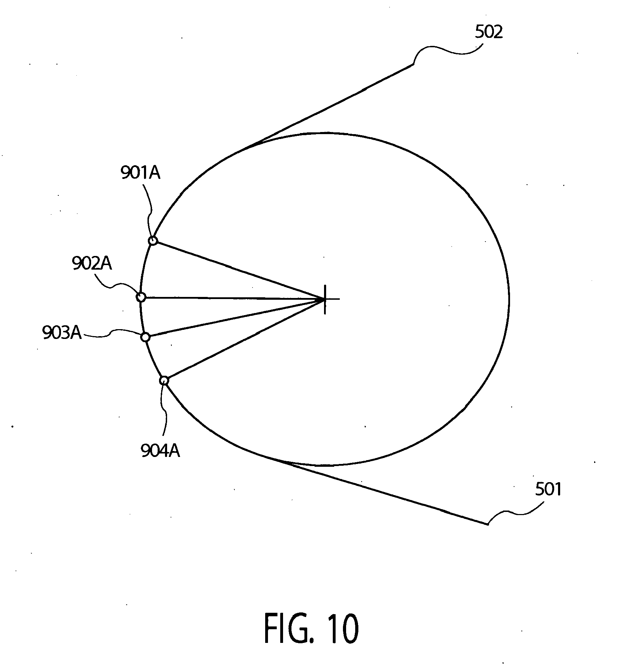

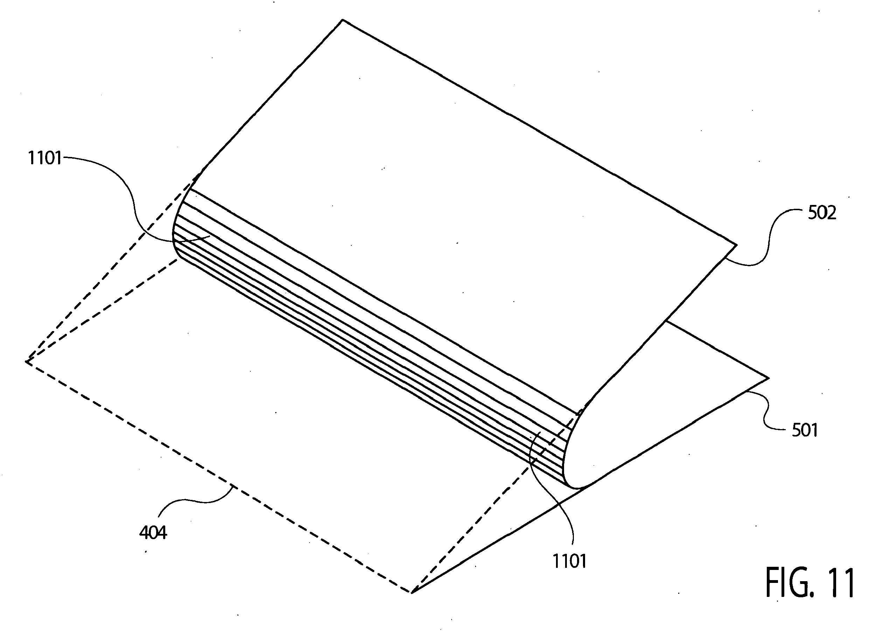

FIG. 10 shows the result of the projection of edge points 901-904 onto the virtual tunnel 801 of FIG. 8, shown in FIG. 10 in cross-section. Specifically, referring to figure 10, projected points 901 A, 902A, 903A and 904A all lie on the rounded surface of that tunnel. The points along the portion of side 501 and 502 that were projected onto the tunnel have been hidden and/or deleted and, as a result, the points on sharp edge 403 including edge portion 404 have been replaced by points on a rounded surface. One skilled in the art will recognize that various methods may be used for connecting the points along the rounded surface of tunnel 801 to create an approximation of the surface of the rounded edge. Such methods include, without limitation, the aforementioned illustrative ball-pivoting algorithm for surface reconstruction. FIG. 11 shows the result of such surface reconstruction. Specifically, referring to that figure, sharp edge portion 404 at the original intersection of sides 501 and 502 of shape 401 of FIG. 4 has been replaced according to the foregoing methods by rounded edge 1101. Thus, according to the foregoing description, ball pivoting to create a virtual tunnel, followed by projection of points onto the tunnel provides a fast and efficient method for rounding and/or filleting undesired sharp edges.

FIG. 12 is a flow chart showing the steps of an illustrative method in accordance with an embodiment of the present invention. Referring to that figure, at step 1201, a model of an object is received. Such a model may be, illustratively, a 3D point cloud representation having a surface approximated by a mesh of triangles. The model may also have been edited as discussed herein above in a way such that sharp edges resulted or, alternatively, the edges to be rounded may have been present on the object as scanned. Once that model has been received, at step 1202, at least one edge to be rounded or filleted is identified. Then, at step 1203, a seed triangle for use in ball pivoting is identified. As discussed herein above, all vertices of the seed triangle should illustratively lie on the sides of the edges, with at least one vertex located on each side. Once the seed triangle has been identified, at step 1204, a ball of a desired radius is positioned such that each of the vertices of the seed triangle lie on the surface of the ball. Then, at step 1205, a leg of the seed triangle is selected about which the ball will pivot and, at step 1206, the position of the ball is recorded and the ball is then pivoted about that leg in a desired direction along the edge to be rounded. At step 1207, another point on one of the sides of the edge to be rounded is encountered and, at step 1208, the pivoting of the ball is stopped such that the new point and the two end points of the leg about which the ball was pivoted lie on the surface of the ball. Then, at step 1209, a new triangle is constructed by drawing lines from the newly encountered point to each endpoint of the leg about which the ball was pivoted. Then, at step 1210, a determination is made whether the end of an edge to be rounded has been reached. If not, then, at step 1211, a new leg is identified about which the ball can be pivoted in the desired direction and the process returns to step 1206. If the determination is made at step 1210, then, at step 1212, a virtual tunnel is created from the recorded positions of the ball as it pivoted and moved along the edge to be rounded. Once the tunnel has been created, at step 1213, lines are drawn from each point within an identified proximity to the edge to be rounded to the center of the virtual tunnel. Then, at step 1214, new points are created at the point of intersection of each line and the surface of the virtual tunnel. At step 1215, the original points within a desired proximity of the edge to be rounded are hidden or deleted and, finally, at step 1216, the projected points along the surface of the virtual tunnel are connected via well-known surface reconstruction methods.

One skilled in the art will recognize that the performance of the above-described rounding methods and the results achieved by using those methods will vary depending on several factors. For example, the performance of a computer adapted to perform the above-described rounding will depend greatly on the number of points along the edge(s) to be rounded. A large number of points will tend to increase the time required to construct the virtual tunnel and, once that tunnel is constructed, will increase the time required to project a large number of points onto the surface of the tunnel. Similarly, the degree of desired rounding will also determine the relative speed of the rounding operation. Specifically, if an edge is to be highly rounded, i.e., if the radius of the edge is to be large, then such a rounded edge will require a virtual tunnel with a large diameter. It follows that the ball used to create the virtual tunnel will require the same large diameter. Such a large diameter ball will increase the number of points reached in the ball pivoting operation as well as the number of points to be projected onto the tunnel once that tunnel has been constructed. However, even in the case of a large ball, the computational complexity will still be lower than some prior attempts, such as well known attempts that required the resampling of the entire surface of an object after rounding operations. In accordance with the foregoing embodiments, only those points nearest the edge to be rounded will require projection onto the virtual tunnel followed by reconstruction of the rounded surface.

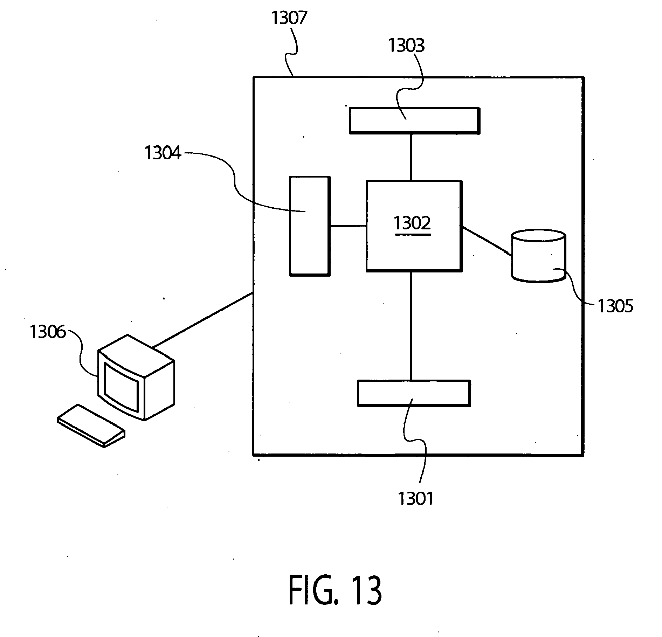

The foregoing embodiments are generally described in terms of manipulating objects, such as lines, triangles, balls, edges and tunnels associated with smoothing sharp edges of a 3D shape. One skilled in the art will recognize that such manipulations may be, in various embodiments, virtual manipulations accomplished in the memory or other circuitry/hardware of an illustrative computer aided design (CAD) system. For example, one skilled in the art will recognize that all references to moving a ball or, alternatively, for moving a representation of a ball, as described herein above and in the claims, refer illustratively to virtual manipulations or movements of a virtual ball in the memory of a computer system, such as the aforementioned CAD system. Such a CAD system may be adapted to perform these manipulations, as well as to perform various methods in accordance with the above-described embodiments, using a programmable computer running software adapted to perform such virtual manipulations and methods. An illustrative programmable computer useful for these purposes is shown in FIG. 13. Referring to that figure, a CAD system 1307 is implemented on a suitable computer adapted to receive, store and transmit data such as the aforementioned positional information associated with the features of a 3D shape. Specifically, illustrative CAD system 1307 may have, for example, a processor 1302 (or multiple processors) which controls the overall operation of the CAD system 1307. Such operation is defined by computer program instructions stored in a memory 1303 and executed by processor 1302. The memory 1303 may be any type of computer readable medium, including without limitation electronic, magnetic, or optical media. Further, while one memory unit 1303 is shown in FIG. 13, it is to be understood that memory unit 1303 could comprise multiple memory units, with such memory units comprising any type of memory. CAD system 1307 also comprises illustrative modem 1301 and network interface 1304. CAD system 1307 also illustratively comprises a storage medium, such as a computer hard disk drive 1305 for storing, for example, data and computer programs adapted for use in accordance with the principles of the present invention as described hereinabove. Finally, CAD system 1307 also illustratively comprises one or more input/output devices, represented in FIG. 13 as terminal 1306, for allowing interaction with, for example, a technician or database administrator. One skilled in the art will recognize that CAD system 1307 is merely illustrative in nature and that various hardware and software components may be adapted for equally advantageous use in a computer in accordance with the principles of the present invention.

One skilled in the art will also recognize that the software stored in the computer system of FIG. 13 may be adapted to perform various tasks in accordance with the principles of the present invention. In particular, such software may be graphical software adapted to import surface models of shapes, for example those models generated from three-dimensional laser scanning of objects. In addition, such software may allow for selective editing of those models in a way that creates sharp edges, as described above, or that permits a user to remove or reshape various portions of those models as described above. The software of a computer-based system such as CAD system 1307 may also be adapted to perform other functions which will be obvious in light of the teachings herein. All such functions are intended to be contemplated by these teachings.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope of the invention.

## Claims

1. A method for rounding an edge (403) between two sides (501,502) of a surface of a model, said surface consisting of a plurality of points connected to form a triangle mesh, said method comprising:
moving a representation of a ball (701) along said edge in a predetermined direction (602);
defining a virtual tunnel (801) through which the ball has passed on moving along said edge;
identifying a plurality of projected points (901A-904A) by projecting a plurality of edge point (901-904) to a surface of the virtual tunnel; and
connecting said projected points in said plurality of projected points:
wherein the step of moving the ball comprises:
identifying a seed triangle (302) wherein points at each of the vertices of the triangle are points on the surfaces of the two sides (501,502);
positioning the ball such that said points at each of the vertices are disposed on a surface of the ball;
selecting a leg (307) between two of said vertices of said seed triangle; and
pivoting said ball about said leg in a way such that the points of said vertices (304,305) remain disposed on said surface of the ball;
wherein the radius of the ball is selected such that only the points at the vertices of the seed triangle are in contact with the surface of the ball and no point disposed on either of the two sides is positioned inside the volume of the ball.

2. The method of claim 1 wherein one point of one vertex of said seed triangle is on a first side of said two sides and a second vertex is on a second side of said two sides.

3. The method of claim 1 wherein said step of identifying a plurality of projected points comprises:
identifying a plurality of intersections of a plurality of lines with said surface of said virtual tunnel, said plurality of lines comprising lines between said plurality of edge points and a center of said virtual tunnel; and
disposing points on said surface of said virtual tunnel at each intersection in said plurality of intersections.

4. The method of claim 1 wherein said step of connecting said projected points comprises growing a triangle mesh.

5. An apparatus for use in rounding an edge between two sides of a surface of a model, said surface consisting of a plurality of points connected to form a triangle mesh, said apparatus comprising:
means for moving a representation of a ball along said edge in a predetermined direction;
means for defining a virtual tunnel through which the ball has passed on moving along said edge;
means for identifying a plurality of projected points by projecting a plurality of edge points to a surface of said virtual tunnel; and
means for connecting said projected points in said plurality of projected points;
wherein the means for moving the ball comprises:
means for identifying a seed triangle wherein points at each of the vertices of the triangle are points on the surfaces of the two sides;
means for positioning said ball in a way such that points at each of the vertices of said seed triangle are disposed on a surface of said ball;
means for selecting a leg between two of said vertices of the seed triangle; and
means for pivoting said ball about said leg in a way such that the points of said vertices remain disposed on said surface of the ball;
means for selecting a radius of said ball such that only the points at the vertices of the seed triangle are in contact with the surface of the ball and no point disposed on either of said two sides is positioned inside the volume of said ball.

6. The apparatus of claim 5 wherein said means for positioning the ball comprises means for positioning the ball such that one point of one vertex of said seed triangle is on a first side of said two sides and a second vertex is on a second side of said two sides.

7. The apparatus of claim 5 wherein said means for identifying a plurality of projected points comprises:
means for identifying a plurality of intersections of a plurality of lines with said surface of said virtual tunnel, said plurality of lines comprising lines between said plurality of edge points and a center of said virtual tunnel; and
means for disposing points on said surface of said virtual tunnel at each intersection in said plurality of intersections.

8. The apparatus of claim 5 wherein said means for connecting said projected points comprises means for growing a triangle mesh.

9. A computer readable medium comprising computer program instructions which, when executed by a processor, define steps for rounding an edge between two sides of a surface of a model, said surface consisting of a plurality of points connected to form a triangle mesh, said steps comprising:
moving a representation of a ball along said edge in a predetermined direction;
defining a virtual tunnel through which the ball has passed on moving along said edge;
identifying a plurality of projected points by projecting a plurality of edge points to a surface of the virtual tunnel; and
connecting said projected points in said plurality of projected points:
wherein the step of moving the ball comprises:
identifying a seed triangle wherein points at each of the vertices of the triangle are points on the surfaces of the two sides;
positioning the ball such that said points at each of the vertices are disposed on a surface of the ball;
selecting a leg between two of said vertices of said seed triangle; and
pivoting said ball about said leg in a way such that the points of said vertices remain disposed on said surface of the ball;
wherein the radius of the ball is selected such that only the points at the vertices of the seed triangle are in contact with the surface of the ball and no point disposed on either of the two sides is positioned inside the volume of the ball.

10. The computer readable medium of claim 9 further comprising computer program instructions for ensuring that one point of one vertex of said seed triangle is on a first side of said two sides and a second vertex is on a second side of said two sides.

11. The computer readable medium of claim 9 wherein said computer program instructions defining the step of identifying a plurality of projected points comprise computer program instructions defining the steps of:
identifying a plurality of intersections of a plurality of lines with said surface of said virtual tunnel, said plurality of lines comprising lines between said plurality of edge points and a center of said virtual tunnel; and
disposing points on said surface of said virtual tunnel at each intersection in said plurality of intersections.

12. The computer readable medium of claim 9 wherein said computer program instructions defining the step of connecting said projected points comprise computer program instructions defining the step of growing a triangle mesh.

## Patentansprüche

1. Ein Verfahren zum Verrunden einer Kante (403) zwischen zwei Seiten (501, 502) der Oberfläche eines Modells, wobei besagte Oberfläche aus einer Vielzahl von Punkten besteht, die miteinander verbunden sind und ein Dreiecksnetz bilden, wobei das besagte Verfahren umfasst:
Bewegen der Repräsentation einer Kugel (701) entlang besagter Kante in einer vorbestimmten Richtung (602);
Definieren eines virtuellen Tunnels (801), durch den die Kugel beim Bewegen entlang der besagten Kante rollt;
Ermitteln einer Vielzahl von projizierten Punkten (901A-904A) durch die Projektion einer Vielzahl von Kantenpunkten (901-904) auf eine Fläche des virtuellen Tunnels; und
Verbinden besagter projizierter Punkte der besagten Vielzahl projizierter Punkte: wobei der Schritt des Bewegens der Kugel umfasst:
Ermitteln eines Startdreiecks (302), wobei die Punkte an jedem der Eckpunkte des Dreiecks Punkte auf den Flächen der zwei Seiten (501, 502) sind;
Positionieren der Kugel derart, dass die besagten Punkte an jedem der Eckpunkte auf einer Fläche der Kugel aufliegen;
Auswählen einer Kante (307) zwischen zwei der besagten Eckpunkte des besagten Startdreiecks; und
Drehen der besagten Kugel um die besagte Kante in einer solchen Weise, dass die Punkte der besagten Eckpunkte (304, 305) weiterhin auf der besagten Oberfläche der Kugel aufliegen;
wobei der Radius der Kugel so gewählt ist, dass nur die Punkte an den Eckpunkten des Startdreiecks die Oberfläche der Kugel berühren und kein Punkt, der auf einer der beiden Seiten aufliegt, innerhalb der Kugel positioniert ist.

2. Das Verfahren nach Anspruch 1, wobei ein Punkt eines Eckpunkts des besagten Startdreiecks sich auf einer ersten Seite der besagten zwei Seiten befindet und ein zweiter Eckpunkt sich auf einer zweiten Seite der besagten zwei Seiten befindet.

3. Das Verfahren nach Anspruch 1, wobei der besagte Schritt des Ermittelns einer Vielzahl von projizierten Punkten umfasst:
Ermitteln einer Vielzahl von Schnittpunkten von einer Vielzahl von Geraden mit besagter Oberfläche des besagten virtuellen Tunnels, wobei die besagte Vielzahl von Geraden Geraden zwischen besagter Vielzahl von Kantenpunkten und einem Mittelpunkt des besagten virtuellen Tunnels umfasst; und
Erhalten von Punkten auf besagter Oberfläche des besagten virtuellen Tunnels an jedem Schnittpunkt von besagter Vielzahl von Schnittpunkten.

4. Das Verfahren nach Anspruch 1, wobei der besagte Schritt des Verbindens besagter projizierter Punkte das Erzeugen eines Dreiecksnetzes umfasst.

5. Eine Vorrichtung zur Verwendung beim Verrunden einer Kante zwischen zwei Seiten einer Fläche eines Modells, wobei besagte Fläche aus einer Vielzahl von Punkten besteht, die miteinander verbunden sind und ein Dreiecksnetz bilden, wobei die besagte Vorrichtung umfasst:
Mittel zum Bewegen der Repräsentation einer Kugel entlang besagter Kante in einer vorbestimmten Richtung;
Mittel zum Definieren eines virtuellen Tunnels, durch den die Kugel beim Bewegen entlang der besagten Kante rollt;
Mittel zum Ermitteln einer Vielzahl von projizierten Punkten durch die Projektion einer Vielzahl von Kantenpunkten auf eine Oberfläche des virtuellen Tunnels; und
Mittel zum Verbinden besagter projizierter Punkte von besagter Vielzahl projizierter Punkte;
wobei das Mittel zum Bewegen der Kugel umfasst:
Mittel zum Ermitteln eines Startdreiecks, wobei die Punkte an jedem der Eckpunkte des Dreiecks Punkte auf den Flächen der zwei Seiten sind;
Mittel zum Positionieren der besagten Kugel derart, dass die Punkte an jedem der Eckpunkte des besagten Startdreiecks auf einer Fläche der besagten Kugel aufliegen;
Mittel zum Auswählen einer Kante zwischen zwei der besagten Eckpunkte des Startdreiecks; und
Mittel zum Drehen der besagten Kugel um die besagte Kante in einer solchen Weise, dass die Punkte der besagten Eckpunkte weiterhin auf der besagten Oberfläche der Kugel aufliegen;
Mittel zum Wählen eines Radius der besagten Kugel derart, dass nur die Punkte an den Eckpunkten des Startdreiecks die Oberfläche der Kugel berühren und kein Punkt, der auf einer der besagten beiden Seiten aufliegt, innerhalb der besagten Kugel positioniert ist.

6. Die Vorrichtung nach Anspruch 5, wobei besagtes Mittel zum Positionieren der Kugel ein Mittel zum derartigen Positionieren der Kugel umfasst, dass ein Punkt eines Eckpunkts des besagten Startdreiecks sich auf einer ersten Seite der besagten zwei Seiten befindet und ein zweiter Eckpunkt sich auf einer zweiten Seite der besagten zwei Seiten befindet.

7. Die Vorrichtung nach Anspruch 5, wobei das besagte Mittel zum Ermitteln einer Vielzahl von projizierten Punkten umfasst:
Mittel zum Ermitteln einer Vielzahl von Schnittpunkten einer Vielzahl von Geraden mit besagter Oberfläche des besagten virtuellen Tunnels, wobei die besagte Vielzahl von Geraden Geraden zwischen besagter Vielzahl von Kantenpunkten und einem Mittelpunkt des besagten virtuellen Tunnels umfasst; und
Mittel zum Erhalten von Punkten auf besagter Oberfläche des besagten virtuellen Tunnels an jedem Schnittpunkt der besagten Vielzahl von Schnittpunkten.

8. Die Vorrichtung nach Anspruch 5, wobei besagtes Mittel zum Verbinden besagter projizierter Punkte ein Mittel zur Erzeugung eines Dreiecksnetzes umfasst.

9. Ein computerlesbares Medium, das Computerprogrammanweisungen umfasst, die, sobald sie von einem Prozessor ausgeführt werden, Schritte definieren, um eine Kante zwischen zwei Seiten einer Oberfläche eines Modells zu verrunden, wobei besagte Oberfläche aus einer Vielzahl von Punkten besteht, die miteinander verbunden sind und ein Dreiecksnetz bilden, wobei besagte Schritte umfassen:
Bewegen einer Repräsentation einer Kugel entlang besagter Kante in einer vorbestimmten Richtung;
Definieren eines virtuellen Tunnels, durch den die Kugel beim Bewegen entlang der besagten Kante rollt;
Ermitteln einer Vielzahl von projizierten Punkten durch die Projektion einer Vielzahl von Kantenpunkten auf eine Fläche des virtuellen Tunnels; und
Verbinden besagter projizierter Punkte der besagten Vielzahl projizierter Punkte: wobei der Schritt des Bewegens der Kugel umfasst:
Ermitteln eines Startdreiecks, wobei die Punkte an jedem der Eckpunkte des Dreiecks Punkte auf den Flächen der zwei Seiten sind;
Positionieren der Kugel derart, dass die besagten Punkte an jedem der Eckpunkte auf einer Fläche der Kugel aufliegen;
Auswählen einer Kante zwischen zwei der besagten Eckpunkte des besagten Startdreiecks; und
Drehen der besagten Kugel um die besagte Kante in einer solchen Weise, dass die Punkte der besagten Eckpunkte weiterhin auf der besagten Oberfläche der Kugel aufliegen;
wobei der Radius der Kugel so gewählt ist, dass nur die Punkte an den Eckpunkten des Startdreiecks die Oberfläche der Kugel berühren und kein Punkt, der auf einer der beiden Seiten aufliegt, innerhalb der Kugel positioniert ist.

10. Das computerlesbare Medium nach Anspruch 9, das ferner Computerprogrammanweisungen umfasst, um sicherzustellen, dass ein Punkt eines Eckpunkts des besagten Startdreiecks sich auf einer ersten Seite der besagten zwei Seiten befindet und ein zweiter Eckpunkt sich auf einer zweiten Seite der besagten zwei Seiten befindet.

11. Das computerlesbare Medium nach Anspruch 9, wobei die besagten Computerprogrammanweisungen, die den Schritt des Ermittelns einer Vielzahl von projizierten Punkten definieren, Computerprogrammanweisungen umfassen, die folgende Schritte definieren:
Ermitteln einer Vielzahl von Schnittpunkten von einer Vielzahl von Geraden mit besagter Oberfläche des besagten virtuellen Tunnels, wobei die besagte Vielzahl von Geraden Geraden zwischen besagter Vielzahl von Kantenpunkten und einem Mittelpunkt des besagten virtuellen Tunnels umfasst; und
Erhalten von Punkten auf besagter Oberfläche des besagten virtuellen Tunnels an jedem Schnittpunkt in der besagten Vielzahl von Schnittpunkten.

12. Das computerlesbare Medium nach Anspruch 9, wobei die besagten Computerprogrammanweisungen, die den Schritt des Verbindens besagter projizierte Punkten definieren, Computerprogrammanweisungen umfassen, die den Schritt des Erzeugens eines Dreiecksnetzes definieren.

## Revendications

1. Procédé pour arrondir une arête (403) entre deux côtés (501, 502) d'une surface d'un modèle, ladite surface consistant en une pluralité de points reliés pour former une maille triangulaire, ledit procédé consistant :
à déplacer une représentation d'une bille (701) le long de ladite arête dans une direction prédéterminée (602) ;
à définir un tunnel virtuel (801) dans lequel la bille est passée en se déplaçant le long de ladite arête ;
à identifier une pluralité de points projetés (901A-904A) en projetant une pluralité de points d'arête (901-904) sur une surface du tunnel virtuel, et
à relier lesdits points projetés parmi ladite pluralité de points projetés,
étant entendu que l'étape de déplacement de la bille consiste :
à identifier un triangle germe (302) dans lequel les points à chacun des sommets du triangle sont des points sur les surfaces des deux côtés (501, 502) ;
à positionner la bille de telle sorte que lesdits points à chacun des sommets soient disposés sur une surface de la bille ;
à sélectionner un côté d'angle (307) entre deux desdits sommets dudit triangle germe, et
à faire pivoter ladite bille autour dudit côté d'angle de manière à ce que les points desdits sommets (304, 305) restent disposés sur ladite surface de la bille ;
étant entendu que le rayon de la bille est sélectionné de telle sorte que seuls les points aux sommets du triangle germe soient en contact avec la surface de la bille et qu'aucun point disposé sur l'un ou l'autre des deux côtés ne soit positionné à l'intérieur du volume de la bille.

2. Procédé selon la revendication 1 dans lequel un point d'un sommet dudit triangle germe est sur un premier côté parmi lesdits deux côtés et un second sommet est sur un second côté parmi lesdits deux côtés.

3. Procédé selon la revendication 1 dans lequel ladite étape d'identification d'une pluralité de points projetés consiste :
à identifier une pluralité d'intersections d'une pluralité de lignes avec ladite surface dudit tunnel virtuel, ladite pluralité de lignes étant constituée de lignes entre ladite pluralité de points d'arête et un centre dudit tunnel virtuel, et
à disposer des points de ladite surface dudit tunnel virtuel à chaque intersection parmi ladite pluralité d'intersections.

4. Procédé selon la revendication 1 dans lequel ladite étape consistant à relier lesdits points projetés consiste à faire croître une maille triangulaire.

5. Appareil à utiliser pour arrondir une arête entre deux côtés d'une surface d'un modèle, ladite surface consistant en une pluralité de points reliés pour former une maille triangulaire, ledit appareil comprenant :
un moyen de déplacer une représentation d'une bille le long de ladite arête dans une direction prédéterminée ;
un moyen de définir un tunnel virtuel dans lequel la bille est passée en se déplaçant le long de ladite arête ;
un moyen d'identifier une pluralité de points projetés en projetant une pluralité de points d'arête sur une surface dudit tunnel virtuel, et
un moyen de relier lesdits points projetés parmi ladite pluralité de points projetés,
étant entendu que le moyen de déplacer la bille comprend :
un moyen d'identifier un triangle germe dans lequel les points à chacun des sommets du triangle sont des points sur les surfaces des deux côtés ;
un moyen de positionner ladite bille de manière à ce que les points à chacun des sommets dudit triangle germe soient disposés sur une surface de ladite bille ;
un moyen de sélectionner un côté d'angle entre deux desdits sommets du triangle germe, et
un moyen de faire pivoter ladite bille autour dudit côté d'angle de manière à ce que les points desdits sommets restent disposés sur ladite surface de la bille ;
un moyen de sélectionner un rayon de ladite bille de telle sorte que seuls les points aux sommets du triangle germe soient en contact avec la surface de la bille et qu'aucun point disposé sur l'un ou l'autre desdits deux côtés ne soit positionné à l'intérieur du volume de ladite bille.

6. Appareil selon la revendication 5 dans lequel ledit moyen de positionner la bille est constitué d'un moyen de positionner la bille de telle sorte qu'un point d'un sommet dudit triangle germe soit sur un premier côté parmi lesdits deux côtés et qu'un second sommet soit sur un second côté parmi lesdits deux côtés.

7. Appareil selon la revendication 5 dans lequel ledit moyen d'identifier une pluralité de points projetés comprend :
un moyen d'identifier une pluralité d'intersections d'une pluralité de lignes avec ladite surface dudit tunnel virtuel, ladite pluralité de lignes comprenant des lignes entre ladite pluralité de points d'arête et un centre dudit tunnel virtuel, et
un moyen de disposer les points sur ladite surface dudit tunnel virtuel à chaque intersection parmi ladite pluralité d'intersections.

8. Appareil selon la revendication 5 dans lequel ledit moyen de relier lesdits points projetés est constitué d'un moyen de faire croître une maille triangulaire.

9. Support lisible en machine comprenant des instructions de programme informatique qui, quand elles sont exécutées par un processeur, définissent des étapes pour arrondir une arête entre deux côtés d'une surface d'un modèle, ladite surface consistant en une pluralité de points reliés pour former une maille triangulaire, lesdites étapes consistant :
à déplacer une représentation d'une bille le long de ladite arête dans une direction prédéterminée ;
à définir un tunnel virtuel dans lequel la bille est passée en se déplaçant le long de ladite arête ;
à identifier une pluralité de points projetés en projetant une pluralité de points d'arête sur une surface du tunnel virtuel, et
à relier lesdits points projetés parmi ladite pluralité de points projetés,
étant entendu que l'étape de déplacement de la bille consiste :
à identifier un triangle germe dans lequel les points à chacun des sommets du triangle sont des points sur les surfaces des deux côtés ;
à positionner la bille de telle sorte que lesdits points à chacun des sommets soient disposés sur une surface de la bille ;
à sélectionner un côté d'angle entre deux desdits sommets dudit triangle germe, et
à faire pivoter ladite bille autour dudit côté d'angle de manière à ce que les points desdits sommets restent disposés sur ladite surface de la bille ;
étant entendu que le rayon de la bille est sélectionné de telle sorte que seuls les points aux sommets du triangle germe soient en contact avec la surface de la bille et qu'aucun point disposé sur l'un ou l'autre des deux côtés ne soit positionné à l'intérieur du volume de la bille.

10. Support lisible en machine selon la revendication 9 comprenant par ailleurs des instructions de programme informatique pour s'assurer qu'un point d'un sommet dudit triangle germe est sur un premier côté parmi lesdits deux côtés et qu'un second sommet est sur un second côté parmi lesdits deux côtés.

11. Support lisible en machine selon la revendication 9 dans lequel lesdites instructions de programme informatique définissant l'étape d'identification d'une pluralité de points projetés comprennent des instructions de programme informatique définissant les étapes consistant :
à identifier une pluralité d'intersections d'une pluralité de lignes avec ladite surface dudit tunnel virtuel, ladite pluralité de lignes étant constituée de lignes entre ladite pluralité de points d'arête et un centre dudit tunnel virtuel, et
à disposer des points de ladite surface dudit tunnel virtuel à chaque intersection parmi ladite pluralité d'intersections.

12. Support lisible en machine selon la revendication 9 dans lequel lesdites instructions de programme informatique définissant l'étape consistant à relier lesdits points projetés comprennent des instructions de programme informatique définissant l'étape consistant à faire croître une maille triangulaire.
